(19) Europäisches Patentamt
European Patent Office
Office européen des brevets

(11) **EP 0 478 260 B1**

(12) **EUROPEAN PATENT SPECIFICATION**

(45) Date of publication and mention
of the grant of the patent:
**19.11.1997 Bulletin 1997/47**

(51) Int Cl.⁶: **D01F 8/14**, D01F 8/06

(21) Application number: **91308645.0**

(22) Date of filing: **23.09.1991**

(54) **Hot-melt-adhesive conjugate fibres containing polyester resins**

Polyesterharze enthaltende schmelzklebende Verbundfäden

Fibres thermoadhésives conjugées contenant des résines de polyester

(84) Designated Contracting States:
**DE FR GB**

(30) Priority: **28.09.1990 JP 260272/90**

(43) Date of publication of application:
**01.04.1992 Bulletin 1992/14**

(73) Proprietor: **CHISSO CORPORATION**
**Osaka (JP)**

(72) Inventors:
• **Hanzawa, Fusao**
**Ichiharashi, Chibaken (JP)**
• **Nakajima, Takayoshi**
**Yasugun, Shigaken (JP)**
• **Yokota, Masahiro**
**Ichiharashi, Chibaken (JP)**
• **Kimura, Kazuyoshi**
**Ichiharashi, Chibaken (JP)**
• **Fujita, Mamoru**
**Ichiharashi, Chibaken (JP)**
• **Ide, Seiji**
**Ichiharashi, Chibaken (JP)**

(74) Representative: **Ruffles, Graham Keith et al**
**MARKS & CLERK,**
**57-60 Lincoln's Inn Fields**
**London WC2A 3LS (GB)**

(56) References cited:
DE-A- 1 495 625          GB-A- 2 096 048
US-A- 4 136 089

• **CHEMICAL ABSTRACTS vol. 114, no. 8, 25**
**February 1991, abstract no. 63916w, Columbus,**
**Ohio, US; & JP-A-2235920 (CHISSO CORP)**
**18.09.1990**
• **CHEMICAL ABSTRACTS vol. 113, no. 2, 30**
**January 1990, abstract no. 7797a, Columbus,**
**Ohio, US; & JP-A-2028244 (TOYOBO CO LTD)**
**30.01.1990**
• **CHEMICAL ABSTRACTS vol. 112, no. 14, 2 April**
**1990, abstract no. 120254p, Columbus, Ohio, US;**
**& JP-A-1235636 (TOYOBO CO LTD) 20.09.1989**
• **WORLD PATENTS INDEX LATEST Derwent**
**Publications Ltd., London, GB; DATABASE**
**WPIL, accession no. 90-346168, week 9046; &**
**JP-A-2251612 (CHISSO CORP) 9.10.1990**
• **WORLD PATENTS INDEX LATEST Derwent**
**Publications Ltd., London, GB; DATABASE**
**WPIL, accession no. 90-087801, week 9012; &**
**JP-A-2041416 (CHISSO CORP) 09.02.1990**

Remarks:
The file contains technical information submitted after the application was filed and not included in this specification

## Description

The invention provides hot-melt-adhesive composite fibers containing low-melting polyester resins capable of notably reducing ply separation. More particularly, the low-melting polyester resins are capable of affording conjugate fibers having a broad hot-melt-adhesive temperature range and also having a high breaking strength, when the polyester resin is used as a part of or in place of the components of conventional hot-melt-adhesive conjugate fibers so far used in the fields of paper diapers and hygienic goods, and is subjected to hot-melt-adhesion.

Processes for producing non-woven fabrics by hot-melt adhesion of a low-melting component of conjugate fibers consisting of a plurality of polymers having different melting points have already been known. Such processes are mainly suitable for producing non-woven fabrics having a medium or low basis weight.

Japanese patent publication No. Sho 55-17807 discloses polyolefin conjugate fibers whose fiber-forming component is polypropylene and the adhesive component of which is polyethylene. However, such fibers have a relatively small difference in the melting points of the two components so that the temperature range in which hot-melt adhesion can be carried out with low heat shrinkage is so narrow that precise temperature control is required for producing non-woven fabrics.

Japanese patent application laid-open No. Sho 57-176217 discloses conjugate fibers whose fiber-forming component is a polyester and the adhesive component of which is polypropylene or polyethylene. Since the fibers have a large difference in the melting points of the two components, the fibers have the advantage that the range of the hot-melt adhesion temperature is much broader than that of the above polyolefin conjugate fibers. On the other hand, the compatibility between the polyester and the polyolefin is inferior so that there is the drawback that the two components are liable to peel from each other. Further, since the conjugate fibers are heat-treated in advance in order to prevent shrinkage at the time of hot-melt adhesion, there are the drawbacks that the fibers are more readily peeled off from each other so that non-woven fabrics produced from such conjugate fibrers have low stiffness; after a load has been repeatedly applied onto the fibers, the resulting fibers are inferior in restoration properties and low in frictional resistance; and the peeled off polyethylene is separated into powder.

Japanese patent publication No. Hei 1-20249 dislcoses conjugate fibers obtained by hot-melt-adhering a fiber-forming component consisting of a copolymer of a modified polyolefin containing carboxyl groups with a polyamide and a polyester and an adhesive component consisting of a modified polyolefin containing carboxyl groups and an unmodified polyolefin or the mixture of the two. In the case of such fibers, the problems so far raised are to a considerable degree overcome that is, ply separation does not readily occur and, further, the temperature range of hot-melt-adhesion is broad. However, quality improvement in conjugate fibers used for paper diapers and hygienic goods is now more and more required. In particular, the breaking strength of non-woven fabrics is still inadequate so that improvement therein is desirable.

JP-A 2041416 describes a heat-adhesive composite fibre consisting of a high melting point polypropylene or polyester fibre with a melting point higher than 150°C and a low melting point polyethylene fibre with a melting point more than 20°C lower.

The present invention provides hot-melt-adhesive conjugate fibres comprising a fibre-forming component and an adhesive component at least one of said fibre-forming component and said adhesive component, being a polyester obtainable by the polycondensation of (i) a diol component comprising 3 to 40 molar % of a 2,2-alkylsubstituted-1,3-propanediol and 60 to 97 molar % of ethylene glycol and/or 1,4-butanediol, and (ii) an aromatic dicarboxylic acid; the polyester resin having a melting point of from 130 to 240°C.

The polyester preferably has a melting point of from 160 to 240°C.

As to the 2,2-alkyl-substituted-1,3-propanediol specifically used as one of the diol components, the alkyl group therein is selected from the group consisting of ethyl group, propyl group, butyl group and pentyl group, and concrete examples of the propanediol are 2,2-diethyl-1,3-propanediol, 2-butyl-2-ethyl-1,3-propanediol and 2-pentyl-2-propyl-1,3-propanediol. These may be used alone or in combination, depending upon their use object.

The reason that the quantity of the 2,2-alkylsubstituted-1,3-propanediol used in the present invention is limited to within the range of 3 to 40 molar % in the diol component is as follows:

If the quantity is less than 3 molar %, the melting point of the resulting polyester resin becomes a high melting temperature very close to that of highly crystalline polyethylene terephthalate. For example, when hot-melt-adhesion is carried out using highly crystalline polyethylene terephthalate as the fiber-forming component and using the resulting modified polyester resin as the adhesive component, the temperature range in which hot-melt-adhesion can be carried out becomes very narrow; hence when a non-woven fabric is produced, a very precise temperature control is required. On the other hand, if the quantity exceeds 40 molar %, the melting point of the resulting polyester resin is very close to or lower than that of polyethylene; thus, hot-melt-adhesive conjugate fibers obtained using such polyester resin as a component are inferior in the spinnability.

Next, as the aromatic dicarboxylic acid subjected to polycondensation with the diol component, terephthalic acid and isophthalic acid are suitable, and terephthalic acid and terephthalic acid containing at most 20 molar % of isophthalic acid are particularly preferred. Namely, if the content of terephthalic acid is less than 80 molar % (i.e. the content of isophthalic acid is 20 molar % or more), the melting point of the resulting polyester resin is very close to or lower than that of polyethylene; thus, if hot-melt-adhesive fibers obtained by using such a polyester resin as a component are made up into a non-woven fabric, the breaking strength of the fabric is notably reduced. In the present invention the polycondensation reaction of the diol component with the aromatic dicarboxylic acid may be carried out according to known process, without needing any particular apparatus, catalyst and additive. The low-melting polyester resin obtained according to the above polycondensation reaction is effective as a component of hot-melt-adhesive conjugate fibers. Namely, in the case of hot-melt-adhesive conjugate fibers consisting of a fiber-forming component and an adhesive component, the low-melting polyester resin is used as at least one of the fiber-forming component and the adhesive component. Thus, it does not matter if the fiber-forming component and the adhesive component are respectively the low-melting polyester resins having different melting points.

Further, depending upon the use object of hot-melt-adhesive conjugate fibers, it does not matter if the fiber-forming component is a mixed component such as that of highly crystalline polyethylene terephthalate with the low-melting polyester resin. In this case, the mixed component may be arranged into a side-by-side type to form a fiber-forming component, or the higher melting component in the mixed component may be arranged as a core component and the lower melting component therein may be arranged as a sheath component, to form a fiber-forming component.

The hot-melt-adhesive conjugate fibers of the present invention may be obtained by conjugate spinning, using a conventional spinneret, and arranging the above fiber-forming component and adhesive component into a side-by-side type or arraning the components into a sheath-and-core type in which the adhesive component is arranged as a sheath component, and the resulting fibers may be, if desired, subjected to stretching, crimping or cutting and used in the form of filaments or staple fibers.

(Effectiveness of the Invention)

The low-melting polyester resin of the present invention makes it possible to notably reduce the ply separation of the fiber-forming component and the adhesive component of the hot-melt-adhesive conjugate fibers as compared with conventional ones.

Further, the hot-melt-adhesive conjugate fibers of the present invention using the low-melting polyester resin have a broad hot-melt-adhesion temperature range, and the fibers may be mixed with other fibers such as those of polyesters or polyolefins so far regarded as having intrinsically an inferior compatibility with polyesters, and made up into non-woven fabrics according to hot-melt-adhesion process. Non-woven fabrics obtained by using the hot-melt-adhesive conjugate fibers of the present invention have almost no ply separation of the fiber-forming component and the adhesive component; hence they have a specific feature of having a far higher breaking strength than conventional ones, and moreover, they have advantages of a superior stiffness and restoration properties after compression.

(Example)

The present invention will be described in more details by way of Examples and Comparative examples, but it should not be construed to be limited thereto. In addition, the evaluation methods of physical properties carried out in these examples are as follows:

(a) Breaking strength:

Sample fibers obtained by applying mechanical crimping (10 crimp/25 mm) to the hot-melt-adhesive conjugate fibers and cutting to a fiber length of 64 mm are passed through a carding machine to obtain a web having a basis weight of 100 g/m², followed by cutting off a sample piece of 25 cm × 25 cm in longitudinal and lateral lengths, from the above web, heat-treating the sample piece at a definite temperature of 140° to 200°C for 5 minutes to prepare a non-woven fabric of about 7 mm thick, cutting off a test piece of 5 cm wide and 15 cm long from the non-woven fabric, and measuring its breaking strength (Kg/5 cm) at a gripping distance of 10 cm and at a stretching rate of 10 cm/min according to JIS L 1096.

(b) Feeling:

With the above non-woven fabric, its feeling was judged by 5 panelors. The case where all of the five panelors judged that it was good, was designated by a symbol of o; the case where 3 to 4 panelors judged that it was good, was designated by a symbol of Δ; and the case where 3 panelors or more judged that it was inferior, was designated by a symbol of ×.

(c) Restoration properties:

On the above non-woven fabric the thickness of which was measured in advance (a cm), was dropped an impactor of 5 cm in diameter and 1 Kg in weight, covered by a flat rubber having a bottom surface of a hardness of 60 Hs according to JIS K 6301A method, from a position of a height of 20 cm, 1,000 times at a rate of 195 times per minute, followed by allowing the resulting fabric to stand for 5 minutes and measuring its thickness (b cm).

The case where the percentage of thickness reduction (%) according to the following equation was less than 5% was judged to be good, the case where the percentage was 5 to 10% was judged to be passable, and the case where the percentage exceeded 10% was judged to be bad, and these cases were designated by symbols o, $\triangle$ and $\times$, respectively:

$$\text{Percentage of thickness reduction (\%)} = (1\text{-}b/a) \times 100.$$

(d) Frictional resistance:

The sample piece subjected to the test of restoration properties was observed by a microscope. The test piece having many occurrences of peeling off, that having few occurrences and that having no occurrence were judged to be bad, passable and good, respectively, and designated as symbols $\times$, $\triangle$ and o, respectively.

Preparation example 1

Into a 2 $\ell$ capacity glass separable flask equipped with a thermometer, a stirrer, a nitrogen gas-feeding tube and a condenser, were fed terephthalic acid (hereinafter abbreviated to TPA) (830 g, 5.0 mols), ethylene glycol (hereinafter abbreviated to EG) (465 g, 7.5 mols) and 2-butyl-2-ethyl-1,3-propanediol (hereinafter abbreviated to DMH) (24 g, 0.15 mol), followed by further adding calcium acetate (0.44 g) as an esterification catalyst and antimony trioxide (0.73 g) as a high-polymerization catalyst, and reacting the mixture under the atmospheric pressure, at 150° to 220°C for 10 hours while passing $N_2$ gas, distilling off generated water (179 g) during the reaction, thereafter reducing the pressure of the reaction system by means of a vacuum pump, distilling off excess glycol (EG) (164 g) inside the reaction system at 220° to 280°C for 5 hours to obtain a polyester resin used in the present invention (hereinafter referred to as PEPO-1) (975 g). As a result of differential scanning calcorimetry analysis (DSC), this PEPO-1 had a melting point of 237°C.

Preparation examples 2 - 5

Example 1 was repeated except that the kinds of the aromatic dicarboxylic acid and the diol components and/or the composition were varied, to prepare polyester resins.

Namely, in Preparation example 2, TPA (830 g, 5.0 mol), EG (372 g, 6.0 mols), 2,2-diethyl-1,3-propanediol (hereinafter abbreviated to DMP) (99 g, 0.75 mol) and 2-pentyl-2-propyl-1,3-propanediol (hereinafter abbreviated to DMN) (188 g, 1.0 mol) were fed and generated water (179 g) and excess glycol (EG) (170 g) were distilled off to obtain a polyester resin having a melting point of 170°C (hereinafter referred to as PEPO-2).

In Preparation example 3, TPA (830 g, 5.0 mols), 1,4-butanediol (hereinafter abbreviated to BG) (540 g, 6.0 mols), DMP (33 g, 0.25 mol), DMH (40 g, 0.25 mol) and DMN (47 g, 0.25 mol) were fed and generated water (178 g) and excess glycol (EG) (157 g) were distilled off to obtain a polyester resin having a melting point of 198°C (hereinafter referred to as PEPO-3).

In Preparation example 4, TPA (789 g, 4.75 mols), isophthalic acid (hereinafter abbreviated to IPA) (42 g, 0.25 mol), EG (403 g, 6.5 mols) and DMH (120 g, 0.75 mol) were fed and generated water (179 g) and excess glycol (EG) (139 g) were distilled off to obtain a polyester resin having a melting point of 189°C (hereinafter referred to as PEPO-4).

In Preparation example 5, TPA (664 g, 4.0 mols), IPA (166 g, 1.0 mol), EG (279 g, 4.5 mols) BG (203 g, 2.25 mols) and DMH (80 g, 0.5 mol) were fed and generated water (178 g) and excess glycol (EG) (138 g) were distilled off to obtain a polyester resin having a melting point of 162°C (hereinafter referred to as PEPO-5).

Comparative preparation example 1

A modified polyester resin having a composition outside the range of the composition of the present invention was prepared in the same manner as in Example 1. Namely, TPA (830 g, 5.0 mols), EG (310 g, 5.0 mols), DMP (165 g, 1.25 mol), and DMH (200 g, 1.25 mol) were fed and generated water (178 g) and excess glycol (EG) (151 g) were distilled off to obtain a polyester resin having a melting point of 118°C (hereinafter referred to as PEPO-6).

The foregoing is summarily shown in Table 1. In addition, for comparison with the polyester resin used in the present invention, commercially available fiber grade highly crystalline polyethylene terephthalate (hereinafter abbreviated to PET-1) is also shown in Table 1.

### Example 6

Melt-spinning was carried out using commercially available highly crystalline polyethylene terephthalate (PET-1) as a fiber-forming component (core component) and the polyester resin (PEPO-1) of the present invention as an adhesive component (sheath component) and employing a sheath-and-core type conjugate spinneret (hole diameter: 0.6 mm and number of holes: 350), in a conjugate ratio of 50/50 at a spinning temperature of 270°C to obtain unstretched filaments of 10 d/f (about 1.1 tex/F), followed by stretching the unstretched filaments to 3.5 times the original length at 80°C, applying crimping (10 crimps/ 25 mm) with a stuffer box and cutting to a fiber length of 64 mm to obtain staple fibers of 3d/f×64 mm (about 0.3 tex/F × 6 × mm), having superior spinnability and stretchability.

The above staple fibers were passed through a carding machine to obtain a web having a basis weight of 100 g/m$^2$, followed by subjecting this web to heat treatment using a a suction drier at 240°C for 5 minutes to prepare a nonwoven fabric.

The results are shown in Table 2. The resulting nonwoven fabric exhibited a good feeling, and values of breaking strength and restoration properties as superior as 38 Kg/5 cm and less than 5%, respectively.

### Examples 7 - 13

The steps of conjugate spinning to heat treatment were carried out in the same manner as in Example 6, using the stocks of the kinds shown in the symbol in Table 1, as a fiber-forming component and/or an adhesive component, to obtain non-woven fabrics. The results are shown in Table 2. In any of these Examples, the resulting non-woven fabrics exhibited a good feeling same as in Example 6 and superior values of breaking strength and restoration properties.

### Comparative examples 2 - 4

As examples of conventional, hot-melt-adhesive conjugate fibers, highly crystalline polyethylene terephthalate/polyethylene conjugate fibers (Comparative example 2) and highly crystalline polyethylene terephthalate/polypropylene conjugate fibers (Comparative example 4) were subjected to tests of spinnability and physical properties of non-woven fabric. Further, conjugate fibers of a polyester resin (PEPO-6) having a composition outside the range of the present invention were similarly tested (Comparative example 3). The results are shown together in Table 2. In both of the cases of Comparative examples 2 and 4, the resulting non-woven fabrics exhibited a good feeling, but the restoration properties and frictional resistance were inferior.

Further, in the case of Comparative example 3, the spinnability was inferior so that stretched yarns capable of being processed into a non-woven fabric could not been obtained.

Table 1

| Symbol | Compositions of low-melting, modified polyester resins (mol %) | | | | | | | M.P. (°C) |
|---|---|---|---|---|---|---|---|---|
| | Aromatic dicarboxylic acid | | Diol component | | | | | |
| | IPA | TPA | EG | BG | DMP | DMH | DMN | |
| PEPO−1 | — | 100 | 97 | — | — | 3 | — | 237 |
| PEPO−2 | — | 100 | 65 | — | 15 | — | 20 | 170 |
| PEPO−3 | — | 100 | — | 85 | 5 | 5 | 5 | 198 |
| PEPO−4 | 5 | 95 | 85 | — | — | 15 | — | 189 |
| PEPO−5 | 20 | 80 | 45 | 45 | — | 10 | — | 162 |
| PEPO−6 | — | 100 | 50 | — | 25 | 25 | — | 118 |
| PET−1 | — | 100 | 100 | — | — | — | — | 258 |

## Table 2

| | Hot-melt-adhesive conjugate fibers | | | | | Non-woven fabric | | | | |
|---|---|---|---|---|---|---|---|---|---|---|
| | Fiber-forming component | Adhesive component | Conju-gate type | Fine-ness d/f \| tex/5 | Spinna-bility | Heat treat-ment temp.(°C) | Breaking strength kg/5cm | Feel-ing | Restora-tion proper-ties | Fric-tional resist-ance |
| Example 6 | PET-1 | PEPO-1 | Sheath-core | 3 \| ~·3 | Good | 240 | 38 | ○ | ○ | ○ |
| Example 7 | PET-1 PEPO-1 | PEPO-2 | Sheath-core | 3 \| ~·3 | Good | 170 | 35 | ○ | ○ | ○ |
| Example 8 | PET-1 | PEPO-3 | Sheath-core | 3 \| ~·3 | Good | 200 | 37 | ○ | ○ | ○ |
| Example 9 | PEPO-1 | PEPO-4 | Sheath-core | 4 \| ~·4 | Good | 190 | 37 | ○ | ○ | ○ |
| Example 10 | PET-1 PEPO-3 | PEPO-5 | Side by side | 4 \| ~·4 | Good | 170 | 39 | ○ | ○ | ○ |
| Example 11 | PET-1 PEPO-3 | Poly-ethylene | Sheath-core | 3 \| ~·3 | Good | 160 | 35 | ○ | ○ | ○ |
| Example 12 | PET-1 PEPO-4 | Poly-propylene | Sheath-core | 3 \| ~·3 | Good | 170 | 34 | ○ | ○ | ○ |
| Example 13 | PEPO-1 PEPO-2 | Poly-ethylene | Sheath-core | 4 \| ~·4 | Good | 160 | 35 | ○ | ○ | ○ |
| Comp.ex. 2 | PET-1 | Poly-ethylene | Sheath-core | 3 \| ~·3 | Good | 160 | 11 | ○ | △ | △ |
| Comp.ex. 3 | PET-1 | PEPO-6 | Sheath-core | 3 \| ~·3 | Bad | 150 | — | — | — | — |
| Comp.ex. 4 | PET-1 | Polypro-pylene | Sheath-core | 4 \| ~·4 | Good | 170 | 9 | ○ | △ | △ |

EP 0 478 260 B1

## EP 0 478 260 B1

### Claims

1. Hot-melt-adhesive conjugate fibres comprising a fibre-forming component and an adhesive component at least one of said fibre-forming component and said adhesive component, being a polyester obtainable by the polycondensation of (i) a diol component comprising 3 to 40 molar % of a 2,2-alkyl-substitued-1,3-propanediol and 60 to 97 molar % of ethylene glycol and/or 1,4-butanediol, and (ii) an aromatic dicarboxylic acid; the polyester resin having a melting point of from 130 to 240°C.

2. Conjugate fibres according to claim 2 wherein the adhesive component is polyethylene or polypropylene.

3. Conjugate fibres according to claim 2 or claim 3 wherein the fibre-forming component and the adhesive component are arranged in side-by-side conformation.

4. Conjugate fibres according to claim 2 or claim 3 wherein the fibre-forming component forms a core component and the adhesive component forms a sheath component of a sheath-core conformation.

5. Conjugate fibres according to any of claims 1 to 4 wherein the alkyl group of the 2,2-alkyl-substituted propanediol is an ethyl, propyl, butyl or pentyl group.

6. Conjugate fibres according to any of claims 1 to 5 wherein the aromatic dicarboxylic acid is a mixture of terephthalic acid with isophthalic acid, the terephthalic acid content being 80 mole % or more.

### Patentansprüche

1. Hotmeltklebstoff-Bikomponentenfasern, umfassend eine faserbildende Komponente und eine Klebstoffkomponente, wobei mindestens eine der faserbildenden Komponente und der Klebstoffkomponente ein Polyester ist, der erhalten werden kann durch die Polykondensation einer (i) Diol-Komponente mit 3% bis 40 Molprozent eines 2,2-Alkyl-substituiert-1,3-propandiols und 60% bis 97 Molprozent Ethylenglykol und/oder 1,4-Butandiol, sowie einer (ii) aromatischen Dicarbonsäure; wobei das Polyesterharz einen Schmelzpunkt von 130° bis 240°C hat.

2. Bikomponentenfasern nach Anspruch 2, bei welchen die Klebstoffkomponente Polyethylen oder Polypropylen ist.

3. Bikomponentenfasern nach Anspruch 2 oder Anspruch 3, bei welchen die faserbildende Komponente und die Klebstoffkomponente in einer Seite-an-Seite-Konformation angeordnet sind.

4. Bikomponentenfasern nach Anspruch 2 oder Anspruch 3, bei welchen die faserbildende Komponente eine Kernkomponente und die Klebstoffkomponente eine Mantel komponente einer Kernmantel bildet.

5. Bikomponentenfasern nach einem der Ansprüche 1 bis 4, wobei die Alkyl-Gruppe des 2,2-Alkyl-substituiert-Propandiols eine Ethyl-, Propyl-, Butyl- oder Pentyl-Gruppe ist.

6. Bikomponentenfasern nach einem der Ansprüche 1 bis 5, wobei die aromatische Dicarbonsäure eine Mischung von Terephthalsäure und Isophthalsäure ist und der Gehalt an Terephthalsäure 80 Molprozent oder mehr beträgt.

### Revendications

1. Fibres conjuguées adhésives thermofusibles comprenant un constituant formant des fibres et un constituant adhésif, au moins l'un dudit constituant formant des fibres et dudit constituant adhésif étant un polyester pouvant être obtenu par la polycondensation de (i) un constituant diol comprenant 3 à 40% en moles d'un 1,3-propanediol 2,2-alkyl-substitué et 60 à 97% en moles d'éthylèneglycol et/ou de 1,4-butanediol, et de (ii) un acide dicarboxylique aromatique; la résine polyester ayant un point de fusion de 130 à 240°C.

2. Fibres conjuguées selon la revendication 2, dans lesquelles le constituant adhésif est un polyéthylène ou un polypropylène.

3. Fibres conjuguées selon la revendication 2 ou la revendication 3, dans lesquelles le constituant formant des fibres et le constituant adhésif sont arrangés en conformation côte-à-côte.

4. Fibres conjuguées selon la revendication 2 ou la revendication 3, dans lesquelles le constituant formant des fibres forme le constituant d'âme, et le constituant adhésif forme le constituant d'enveloppe d'une conformation enveloppe-âme.

5. Fibres conjuguées selon l'une quelconque des revendications 1 à 4, dans lesquelles le groupe alkyle du propanediol 2,2-alkyl-substitué est un groupe éthyle, propyle, butyle ou pentyle.

6. Fibres conjuguées selon l'une quelconque des revendications 1 à 5, dans lesquelles l'acide dicarboxylique aromatique est un mélange d'acide téréphtalique avec de l'acide isophtalique, la teneur en acide téréphtalique étant de 80% en moles ou plus.